# EUROPÄISCHE PATENTSCHRIFT

(11) **EP 4 208 513 B1**
(45) Veröffentlichungstag und Bekanntmachung des Hinweises auf die Patenterteilung: **13.08.2025**
(21) Anmeldenummer: 21769927.1
(22) Anmeldetag: 25.08.2021
(51) Int. Cl.: C09D 5/14

(54) **HARZHALTIGE ZUSAMMENSETZUNG MIT ANTIMIKROBIELLEN EIGENSCHAFTEN, INSBESONDERE BIOZIDEN EIGENSCHAFTEN, FÜR OBERFLÄCHENBESCHICHTUNGEN AUF PAPIERLAGEN ODER HOLZWERKSTOFFPLATTEN**
METHOD FOR THE PREPARATION OF A SUBSTRATE WITH AN ANTIVIRAL COATING
PROCÉDÉ DE FABRICATION D'UN SUPPORT POURVU D'UN REVÊTEMENT ANTIVIRAL

(30) Priorität: 03.09.2020 EP 20194328; 04.12.2020 EP 20211912
(43) Veröffentlichungstag der Anmeldung: 12.07.2023
(73) Patentinhaber: SWISS KRONO Tec AG, 6004 Luzern (CH)
(72) Erfinder: GIER, Andreas, 66399 Mandelbachtag (DE); HASCH, Joachim, 10317 Berlin (DE); KALWA, Norbert, 32805 Horn-Bad Meinberg (DE)
(74) Vertreter: Maikowski & Ninnemann Patentanwälte Partnerschaft mbB
(86) Internationale Anmeldenummer: PCT/EP2021/073513
(87) Internationale Veröffentlichungsnummer: WO 2022/048970

(56) Entgegenhaltungen:
- WO-A1-2019/045110
- CN-A- 111 138 894
- DE-A1- 102005 000 905
- DE-A1- 102006 001 641
- DE-A1- 102008 051 543
- US-A1- 2010 204 357
- US-A1- 2010 261 629
- US-A1- 2012 176 663
- US-A1- 2013 172 419

## Beschreibung

Die vorliegende Erfindung betrifft eine harzhaltige Zusammensetzung mit antimikrobiellen Eigenschaften, insbesondere bioziden Eigenschaften, für Oberflächenbeschichtungen auf Papierlagen oder Werkstoffplatten, , die Verwendung dieser Zusammensetzung, damit beschichtete Papierlagen oder Holzwerkstoffplatten, sowie Verfahren zur Herstellung einer mit einer antiviralen Beschichtung versehenen Papierlage oder Holzwerkstoffplatte.

### Beschreibung

In verschiedenen Bereichen werden bei Möbeln, Bodenbelägen und Innenausbau Holzwerkstoffplatten und Elemente mit einer Melaminoberfläche eingesetzt. Sie sind nicht nur dekorativ, sondern besitzen hervorragende Oberflächeneigenschaften. Zusätzlich wird immer häufiger gefordert, dass sie auch bestimmte hygienische Eigenschaften besitzen. Von Melaminoberflächen ist bekannt, dass sie sich leicht und schnell desinfizieren lassen. Auch führt der Einsatz von Desinfektionsmittelen typischerweise nicht zu Oberflächenveränderungen. Allerdings besteht dabei oft das Problem, dass die Ausrüstung der Oberfläche lediglich für einen bestimmten Zeitraum einen Schutz bietet, weil der Wirkstoff nicht in die Oberfläche eingebettet ist. Er wird nachträglich aufgetragen und wird dann durch Reinigung oder Verschleiß wieder von der Oberfläche abgetragen.

Im besten Falle sollten die Oberflächen gar keiner Desinfizierung bedürfen, da sie per se antibakteriell oder antiviral ausgerüstet sind. Dies gilt insbesondere für Anwendungen im Gesundheitswesen wie Arztpraxen, Krankenhäuser, Altenheime, Rehaeinrichtungen usw. Ein effektiver und langanhaltender Schutz vor Bakterien oder Viren sollte daher in die dekorative Oberfläche eingebettet sein, sodass im günstigsten Fall ein permanenter Schutz gewährleistet wird. Zumal ein sich langsam verschlechternder Schutz eine Unsicherheit bezüglich der noch vorhandenen Restwirksamkeit erzeugt.

Die Ausrüstung von verschiedenen Gegenständen mit antimikrobiellen, harzbeschichteten Oberflächen ist bekannt. US 2012/0176663 A1 betrifft ein elektrophoretisches Display umfassend Mikrocups, ein in die Mikrocups gefülltes elektrophoretisches Fluid, und eine Abdichtung aus einer Abdichtungszusammensetzung aus einem wasserlöslichen Polymer (u.a. Melamin-Formaldehyd-Harz) und eine wasserbasierte Suspension mit einem Polymer (u.a. Polyurethan). US 2010/261629 A1 betrifft eine Partikelzusammensetzung mit einem oder mehreren Partikeln aus einem Kernmaterial und einem Wandmaterial. Das Kernmaterial kann aus Siliconöl, Wachsen, Lipiden, Vitaminen, Antioxidantien u.a. bestehen. Das Wandmaterial kann aus polymeren Materialien (u.a. Polyamine, Zellulose, Melamin-Formaldehyd-Harz) bestehen. US 2010/204357 A1 betrifft eine Beschichtungszusammensetzung umfassend ein filmbildendes Harz, einen porösen Feststoff (wie Zeolite) mit in die Poren eingelagerten antimikrobiellen Metallen, eine Halogen-Ion enthaltende Onium-Verbindung, wobei die Beschichtung eine gute UV-Stabilität aufweist. WO 2019/045110 A1 beschreibt eine antibakterielle / antivirale Zusammensetzung umfassend ein Harz, ein antivirales Agent umfassend monovalente Kupfermikropartikel beschichtet mit einem Dispergiermittel und einer hydrophilen Komponente, die in dem Harz dispergiert ist.

Aus der US 2013/0172419 A1 ist die Verwendung einer Polymerzusammensetzung umfassend mindestens ein Silicon-Ionomer und ein weiteres Polymer, aktive Agentien wie Biozide und Füllstoffe bekannt, die in Wundverbänden, klinischen Oberflächen, chirurgischen Geräten, Implantaten, Dekorschichten oder kosmetischen Produkten eingesetzt werden kann.

Ein Beispiel für einen weiteren Ansatz ist in der WO 2013/156595 A1 beschrieben. Hier wird ein oberflächenaktiver Stoff bzw. ein Tensid mit einem Nanomaterial versehen, wobei ein antimikrobieller Nanomaterial-Komplex gebildet wird. Als Tensid wird ein quaternäres Ammoniumkation haltiges Tensid verwendet. Als Nanomaterial werden Silizium-Nanopartikel oder Kohlenstoffnanoröhren benannt. Der gebildete antimikrobielle Komplex wird zur Beschichtung von Oberflächen verwendet.

Die Ausstattung von Holzwerkstoffplatten mit einem permanenten antimikrobiellen Schutz der Oberflächen ist von Laien nur schwer bewerkstelligen, da diese in der Regel über die genauen Randbedingungen der Herstellung und der Applikation (Auftragsmengen, Auftragsbedingungen usw.) nicht informiert sind. Zudem sind die Zubereitungen, die eingesetzt werden müssen, gesundheitlich nicht unbedenklich und sollten deshalb nur von geschultem Personal angewendet werden. Außerdem führt die sich in regelmäßigen Abständen wiederholende Applikation zu Nutzungsausfällen. Diese wiederholten Applikationen führen selbstverständlich auch zu höheren Kosten.

Daraus ergeben sich verschiedene Nachteile, wie hoher Aufwand, umständliche Lösungen, permanente Kosten und Unsicherheit bezüglich Schutzfunktion.

Der vorliegenden Erfindung lag daher die technische Aufgabe zu Grunde eine Melaminharzoberfläche mit einer antiviralen Komponente auszustatten. Diese sollte in die Harzmatrix im Bereich der Oberfläche eingebettet sein. Selbstverständlich sollen durch die Zugabe des Wirkstoffes die Oberflächeneigenschaften des Produktes nicht verschlechtert werden. Auch die Herstellung der antiviralen Oberfläche soll auf den vorhandenen Anlagen möglich sein. Keinesfalls soll von der modifizierten Oberfläche eine toxische Gefährdung ausgehen, die die Einsatzmöglichkeiten in irgendeiner Weise einschränkt.

Diese Aufgabe wird erfindungsgemäß durch eine Zusammensetzung mit den Merkmalen des Anspruchs 1 gelöst.

Entsprechend wird eine harzhaltige Zusammensetzung mit antimikrobiellen, bioziden Eigenschaften, insbesondere antiviralen Eigenschaften, für Oberflächenbeschichtungen von Papierlagen oder Werkstoffplattenbereitgestellt, wobei die Zusammensetzung umfasst:
- mindestens ein Formaldehyd-Harz, insbesondere ein Melamin-Formaldehyd-Harz,
- mindestens eine Verbindung der allgemeinen Formel (I)

   **R¹SiX₃** **(I),**

   wobei
   - X Alkoxy, ist, und
   - R¹ ein organischer Rest ist ausgewählt aus der Gruppe umfassend C1-C10 Alkyl, , die durch -O- oder -NH- unterbrochen sein können, und
   - wobei R¹ mindestens eine funktionelle Gruppe Q₁ aufweist, die ausgewählt ist aus einer Gruppe enthaltend eine Amino-, Methacryl-, Methacryloxy-, Vinyl- und Epoxid- Gruppe, und
- mindestens eine weitere Verbindung der allgemeinen Formel (II)

   **SiX₄** (II),

   wobei X Alkoxy ist, und
- mindestens zwei Biozide.

Mit der vorliegenden Zusammensetzung ist das Einbringen bzw. Einbetten von bioziden Wirkstoffen in eine Harzmischung bzw. Harzmatrix, wie z.B. eine Melaminharzmatrix, möglich, die auf Oberflächen von Trägermaterialien wie Holzwerkstoffplatten oder Papierlagen aufgetragen werden. Für diesen Zweck umfasst die vorliegende Zusammensetzung mit der mindestens einen Silanverbindung der allgemeinen Formel (I) und optional, einer weiteren Silanverbindung der allgemeinen Formel (II) eine vernetzende, hydrophile Komponente. Die Silanverbindung der Formel (I) bindet über die funktionellen Gruppen Q1 an die Harzkomponente und den antimikrobiellen Wirkstoff. Die Silanverbindung der Formel (II) dient dem Aufbau eines SiO₂ Netzwerkes über Kondensation der OH-Gruppen, Anbindung an Melaminharz und den antimikrobiellen Wirkstoff. Der biozide Wirkstoff wird an die Silane angekoppelt. Der Komplex aus Wirkstoff und Silan kann dann fest in das Melaminharz über die während des Härtens bzw. Verpressens ablaufenden Kondensationsprozesse eingebunden werden.

Es sei darauf hingewiesen, dass die vorliegende harzhaltige Zusammensetzung nicht auf anorganische, lederhaltige, glashaltige, metall- oder halbmetallhaltige Beschichtungen, Oberflächen oder Materialien aufgetragen wird. Insbesondere wird die vorliegende harzhaltige Zusammensetzung ausschließlich auf zellulosehaltige Oberflächen und Materialien, wie Papier und Holzwerkstoffen, jedoch keine Textilien, aufgetragen.

Nanoskalige Teilchen, die wie weiter unten beschrieben optional zugegeben werden können, ermöglichen aufgrund der großen Oberfläche von z.B. mehr als 200 m²/g eine weitere Aufnahme von Wirkstoff und eine Einbindung über OH Gruppen in die Harzmatrix.

Neben den Silanen können auch noch andere Alkoxide, insbesondere Alkoxytitanate wie z.B. Titanisobutylat als Verbindungsmittel zwischen Harz und Wirkstoff verwendet werden, welches aber im Gegensatz zu den Silanen deutlich schneller hydrolysiert und kondensiert.

Die vorliegende Zusammensetzung kann als Beschichtungs- oder Imprägierharz, verwendet werden. Im Falle von Imprägnierharzen kann die vorliegende harzhaltige Zusammensetzung nach der Kernimprägnierung von Papierlagen (Dekorpapier, Overlaypapier) mit den üblicherweise verwendeten Imprägnierharzen und einer Zwischentrocknung auf die Oberseite der kernimprägnierten Papierlage (Imprägnat) aufgebracht wird. Die vorliegende harzhaltige Zusammensetzung kann aber auch auf eine bedruckte Holzwerkstoffplatte aufgebracht werden.

Die Verwendung der vorliegenden Zusammensetzung bietet verschiedene Vorteile. So ergibt sich durch die Einbettung des Wirkstoffes in die Harzmatrix ein permanenter antimikrobieller Schutz; ein Auswaschen des Wirkstoffes ist erschwert bzw. nicht möglich. Zudem werden die Desinfektionskosten reduziert, da der Wirkstoff nur einmal in die Oberflächenschicht eingebracht wird; ein wiederholtes Auftragen eines Desinfektionsmittels kann vermieden werden.

In einer Weiterführung ist es auch möglich, dass Silan und das Biozid nicht als einzelne Komponenten verwendet werden, die nach Reaktion einen Silan-Biozid-Komplex bilden, sondern dass ein bereits fertiger Silan-Biozid-Komplex wie z.B. 3-Trimethoxysilylpropyldimethyloctylammoniumchlorid verwendet wird.

Der hydrolysierbare Rest X der allgemeinen Formeln (I) und (II) ist vorteilhafterweise ausgewählt aus einer Gruppe enthaltend C₁₋₆-Alkoxy, insbesondere Methoxy, Ethoxy, n-Propoxy, i-Propoxy und Butoxy.

In einer besonders bevorzugten Variante der vorliegenden Zusammensetzung umfasst die Verbindung der allgemeinen Formel (II) der Formel SiX₄ Methoxy, Ethoxy, n-Propoxy oder i-Propoxy und Butoxy, als X. Besonders bevorzugt sind die Verbindungen Tetramethoxysilan und Tetraethoxysilan als Verbindung der allgemeinen Formel (II).

Der organische Rest R¹ der Verbindung der allgemeinen Formel (I) ist bevorzugt ausgewählt aus einer Gruppe umfassend Methyl, Ethyl, n-Propyl, Isopropyl, n-Butyl, s-Butyl, t-Butyl, Pentyl, Hexyl, Heptyl, Octyl, Cyclohexyl, die durch -O- oder -NH- unterbrochen sein können.

In einer Ausführungsform der vorliegenden Zusammensetzung ist die mindestens eine funktionelle Gruppe Q¹ der Verbindung der allgemeinen Formel (I) ausgewählt aus einer Gruppe enthaltend Epoxid-, Amino, und Vinyl. Besonders bevorzugte funktionelle Gruppen Q¹ sind Glycidyloxy-, Aminoethylamino-. Die funktionelle Gruppe Q¹ kann vorteilhafterweise einen Rest mit einer Doppelbindung oder einer Epoxid-Gruppe aufweisen, der mittels UV-Strahlung aktivierbar und polymerisierbar ist.

In einer Variante der vorliegenden Zusammensetzung können Verbindungen der allgemeinen Formel (I) gemäß R¹SiX₃, mit einer funktionellen Gruppe Q¹ ausgewählt sein aus Methacryloxypropyltrimethoxysilan (MPTS), Aminoethyl-aminopropyltrimethoxysilan, Silane mit einer Epoxyfunktionalisierung wie Glycidyl-oxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen.

Der Begriff "substituiert", in Verwendung mit "Alkyl", "Cycloalkyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀Alkylthio und C₁-C₁₀-Alkylsulfonyl. Die substituierten Alkygruppen, Arylgruppen, Alkenylgruppen, können einmal oder mehrfach substituiert sein und bevorzugt ein- oder zweimal, mit denselben oder unterschiedlichen Substituenten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer Variante können mindestens eine Verbindung der allgemeinen Formel (I) und mindestens eine Verbindung der allgemeinen Formel (II), oder mindestens zwei Verbindungen der allgemeinen Formel (I) und mindestens eine Verbindung der allgemeinen Formel (II) enthalten sein. Jegliche Kombination ist hier vorstellbar.

So kann eine Ausführungsform der harzhaltigen Zusammensetzung enthalten:
- mindestens ein Formaldehyd-Harz, insbesondere ein Melamin-Formaldehyd-Harz,
- mindestens eine Verbindung der allgemeinen Formel (I) R¹SiX₃, wobei X Alkoxy, ist, und R¹ ein organischer Rest ist ausgewählt aus der Gruppe umfassend C1-C10 Alkyl, , die durch -O- oder -NH- unterbrochen sein können, und wobei R¹ mindestens eine funktionelle Gruppe Q₁ aufweist, die ausgewählt ist aus einer Gruppe enthaltend eine Vinyl- und Epoxid-Gruppe, und
- mindestens eine weitere Verbindung der allgemeinen Formel (II) SiX₄, wobei X Alkoxy ist.

Diese Silane haben sich als besonders vorteilhaft für den Einbau und chemische Anbindung von Bioziden mit funktionellen Gruppen wie Hydroxy-Gruppen oder Carboxy-Gruppen in die Harzmatrix erwiesen.

Eine weitere Ausführungsform der harzhaltigen Zusammensetzung kann enthalten:
- mindestens ein Formaldehyd-Harz, insbesondere ein Melamin-Formaldehyd-Harz,
- mindestens eine erste Verbindung der allgemeinen Formel (I) R¹SiX₃, wobei X Alkoxy, ist, und R¹ ein organischer Rest ist ausgewählt aus der Gruppe umfassend C1-C10 Alkyl, , die durch -O- oder -NH- unterbrochen sein können, und wobei R¹ mindestens eine funktionelle Gruppe Q₁ aufweist, die ausgewählt ist aus einer Gruppe enthaltend eine Vinyl- und Epoxid-Gruppe,
- mindestens eine zweite Verbindung der allgemeinen Formel (I) R¹SiX₃, wobei X Alkoxy, ist, und R¹ ein organischer Rest ist, ausgewählt aus der Gruppe umfassend C1-C10 Alkyl, die durch -O- oder -NH- unterbrochen sein können, und wobei R¹ mindestens eine funktionelle Gruppe Q₁ aufweist, die ausgewählt ist aus einer Gruppe enthaltend eine AminoGruppe, und
- mindestens eine weitere Verbindung der allgemeinen Formel (II) SiX₄, wobei X Alkoxy ist.

Diese Silan-Mischung hat sich als besonders vorteilhaft für den Einbau und chemische Anbindung von Bioziden erwiesen, die einer Komplexierung zugänglich sind, wie z.B. Kupfersulfat.

In einer besonders bevorzugten Variante kann die Zusammensetzung Glycidyloxypropyltriethoxysilan als Verbindung der Formel (I) und Tetraethoxysilan als Verbindung der Formel (II) aufweisen. In einer weiteren bevorzugten Variante kann die Zusammensetzung Glycidyloxypropyltriethoxysilan als erste Verbindung der Formel (I), Aminoethylaminpropyltriethoxysilan als zweite Verbindung der Formel (I) und Tetraethoxysilan als Verbindung der Formel (II) enthalten.

Die molaren Verhältnisse der Verbindung der Formel (I) und der Formel (II) können in der Zusammensetzung in einem Bereich zwischen 0,5 : 1 bis 25 : 1, bevorzugt zwischen 5 :1 und 15:1 liegen. So kann das molare Verhältnis von Glycidyloxypropyltriethoxysilan zu Tetraethoxysilan zwischen 0,8 : 1 bis 4 : 1 liegen, und das molare Verhältnis von Glycidyloxypropyltriethoxysilan zu Aminoethylaminpropyltriethoxysilan zwischen 0,7 :1 bis 2: 1 liegen.

Wie oben bereits angedeutet, handelt es sich bei dem verwendeten antimikrobiellen Wirkstoff um ein Biozid. Bevorzugt werden keine silberhaltigen oder zinkhaltigen Biozide verwendet. Voraussetzung für die Auswahl eines geeigneten Biozids ist, das dieses der EU-Verordnung Nr. 528/2012 über das Inverkehrbringen von Biozid-Produkten entspricht. Biozide können entweder nach Produktarten wie Desinfektionsmittel und Schutzmittel oder nach deren Zielorganismen (Viruzide, Bakterizide, Fungizide etc.) eingeteilt werden. Eine weitere wesentliche Voraussetzung ist die Kompatibilität des Biozids mit dem verwendeten Harz.

Vorliegend kann das mindestens eine Biozid ausgewählt sein aus einer Gruppe umfassend Benzalkoniumchlorid, Oktylammoniumchlorid, Chitosan, Phenylphenol, Kupfersulfat, Milchsäure, Nonansäure, Natriumbenzoat, 1-[[2-(2,4-dichlorophenyl)-4-propyl-1,3-dioxolan-2-yl]methyl]-1H-1,2,4-triazole, 2-octyl-2H-isothiazol-3-one, Thiazol-4-yl-1H-benzoimidazole, 3-lodo-2-propynylbutylcarbamat, Biphenyl-2-ol, Bronopol / Kalzium- Magnesiumoxid, Kupfer (II) oxid, 2-Pyridinthiol-1-oxid, 4-Chlor-meta-kresol. Besonders bevorzugte Biozide sind Benzalkoniumchlorid, Chitosan, Phenylphenol, Kupfersulfat, 4-Chor-3-methylphenol. Die angeführten Wirkstoffe stammen aus Produktfamilien 2 und 9, die für antiviral wirkende Fußböden bereits genehmigt sind bzw. sich in Genehmigung befinden.

Das mindestens eine Biozid kann in der vorliegenden Zusammensetzung in einer Menge (bezogen auf die Menge der Zusammensetzung aus zwei Silanen und Biozid, ohne Harz) zwischen 10 und 30 Gew%, bevorzugt zwischen 15 und 25 Gew%, insbesondere bevorzugt zwischen 18 und 23 Gew%, z.B. 20 Gew% oder 22 Gew%, enthalten sein.

Erfindungsgemäß ist vorgesehen, dass die harzhaltige Zusammensetzung mindestens zwei Biozide enthält.

Es hat sich nämlich herausgestellt, dass im Falle von bestimmten Bioziden, wie z.B. Phenylphenol, es bei hohen Mengen des Biozids von z.B. über 20 Gew% es zu einer Entmischung der harzhaltigen Zusammensetzung und somit zu optischen Inhomogenitäten auf den Oberflächen kommen kann.

Um in solchen Fällen trotzdem eine hohe Wirksamkeit des antiviralen Additivs zu gewährleisten, hat es sich als vorteilhaft erwiesen, ein weiteres Biozid, wie z.B. 4-Chor-3-methylphenol, der harzhaltigen Zusammensetzung, insbesondere im Unterschuss, zuzugeben. Auf diese Weise wird eine Entmischung vermieden und gleichzeitig eine gute antivirale Aktivität gewährleistet.

Im Falle der Verwendung von zwei Bioziden kann das erste Biozid in einer Menge zwischen 15 und 25 Gew%, bevorzugt 20 Gew%, und das zweite Biozid in einer Menge zwischen 0,1 und 2 Gew%, bevorzugt zwischen 0,3 und 0,8 Gew%, besonders bevorzugt 0,5 Gew% (jeweils bezogen auf die Menge der Zusammensetzung aus zwei Silanen und Biozid, ohne Harz) verwendet werden.

In einer besonders bevorzugten Variante wird als erstes Biozid Phenylphenol und als zweites Biozid 4-Chor-3-methylphenol verwendet. Die Menge an Phenylphenol kann dabei 20 Gew % und die Menge an 4-Chor-3-methylphenol kann 0,48 Gew% betragen.

Es wäre aber auch möglich, die zwei Biozide in einem Gewichtsverhältnis zwischen 1 : 0,5 und 1 : 1,5, insbesondere von 1 : 1 einzusetzen; d.h die zwei Biozide können z.B. in gleichen Mengen verwendet werden. Das Mengenverhältnis wird über die spezifischen Eigenschaften der verwendeten Biozide gesteuert.

Das molare Verhältnis von Silan zu antiviralen Wirkstoff kann in einem Bereich zwischen 100 : 1 bis 5 : 1 liegen.

In einer weiteren Ausführungsform kann die vorliegende Zusammensetzung anorganische Partikel, insbesondere Nanopartikel auf der Basis von SiO₂, wie Kieselgele oder Zeolithe, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel kann die Menge an aufgenommenen Wirkstoff weiter erhöht werden.

Das Massenverhältnis zwischen Oxid aus Alkoxiden und Oxid aus zusätzlichen Nanopartikel beträgt von 1,4 : über 1,26 : 1 bis 1 : 2,3. Typische Kieselgele sind Kieselsole wie Levasil 200 B 30, CS 30 716P, CS 20 516P. Diese Kieselsole weisen eine Depotwirkung auf und können somit die Wirksamkeit verbessern.

Wie oben bereits angedeutet, kann in einer noch weiteren Ausführungsform vorgesehen sein, der vorliegenden Zusammensetzung mindestens ein Alkoxytitanat, wie Tetraisopropylorthotitanat (Titanisopropylat) oder Tetraisobutylorthotitanat (Titanisobutylat), zuzugeben. Diese dienen als weitere Verbindungsmittel zwischen Harz und Wirkstoff, welche aber im Falle der Alkoxytitanate im Gegensatz zu den Silanen deutlich schneller hydrolysieren und kondensieren. Gleichzeitig erhöht es die Kondensationsrate des gesamten Systems, so dass ein Entfernen des Alkohols einfacher möglich ist und somit rein wässrige Systeme zugänglich sind.

Das Verhältnis Silan zu Alkoxytitanat liegt bei 30:1, bevorzugt bei 26,6 : 1.

Die vorliegende harzhaltige Zusammensetzung wird bevorzugt in wässriger Form verwendet, wobei kein Alkohol oder eine geringe Menge an Alkohol enthalten sein können.

Im Falle einer wässrigen Zusammensetzung kann diese in einem Verfahren umfassend die folgenden Schritte hergestellt werden:
- Bereitstellen von einer wässrigen Suspension enthaltend mindestens eine Verbindung der allgemeinen Formel (I), und mindestens eine Verbindung der allgemeinen Formel (II);
- Zugabe von mindestens einem Katalysator, insbesondere einer Säure, zu der Suspension aus mindestens einer Verbindung der Formel (I) und mindestens einer Verbindung der Formel (II);
- Erwärmen des Gemisches;
- Zugabe von mindestens einem antimikrobiellen Wirkstoff und ggf. Erwärmen der Mischung;
- ggfs. Abtrennen der gebildeten alkoholischen Phase (z.B. durch Verdampfen) von der wässrigen Phase des Gemisches aus mindestens einer Verbindung der Formel (I), mindestens einer Verbindung der Formel (II), und dem mindestens einem antimikrobiellen Wirkstoff;
- Zugabe der Mischung (bzw. Additivs) aus zwei Silanen und Biozid zu einem Formaldehyd-Harz

Als Katalysator geeignete anorganische und/oder organische Säuren sind ausgewählt aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

In dem Fall, dass anorganische Nanopartikel, wie z.B. Kieselsol, der Zusammensetzung zugemischt werden, werden diese bevorzugt zusammen mit dem Wirkstoff zugegeben. In einer Variante kann der Wirkstoff aber auch zeitversetzt zum Kieselsol, z.B. nach dem Kieselsol zugegeben werden.

Die hergestellte wässrige Suspension der Zusammensetzung aus zwei Silanen und Biozid ist stabil und wird als Additiv in wässrige, wärmehärtbare Formaldehydharze wie Melaminharze, eingerührt und zur Erzeugung einer antimikrobiellen Oberfläche verwendet werden. UVhärtbare Polymere bzw. Lacke werden vorliegend als Matrix für die antivirale Zusammensetzung bzw. Additiv umfassend die zwei Silane und das Biozid nicht verwendet.

Es ist aber auch möglich, dass die einzelnen Komponenten; d.h. Silane und Biozid, der Zusammensetzung direkt in das Harz eingemischt werden; d.h. in diesem Fall liegt die Zusammensetzung nicht als separates Additiv vor, sondern wird vielmehr in situ im Harz hergestellt.

In diesem Falle wird die Zusammensetzung in situ wie folgt hergestellt:
- Vorlegen einer Harzsuspension, insbesondere einer Formaldehyd-Harz-Suspension wie einem Melaminformaldehydharz;
- Zugabe von einer wässrigen Suspension enthaltend mindestens eine Verbindung der allgemeinen Formel (I), und optional mindestens eine Verbindung der allgemeinen Formel (II);
- Zugabe von mindestens einem Katalysator, insbesondere einer Säure, zu der Suspension aus mindestens einer Verbindung der Formel (I) und optional mindestens einer Verbindung der Formel (II);
- Erwärmen des Gemisches;
- Zugabe von mindestens einem antimikrobiellen Wirkstoff und ggf. von anorganischen Nanopartikeln, wie Kieselsol;
- weiteres Erwärmen der Mischung bis das modifizierte Harz erhalten wurde.

Nach Zugabe der antimikrobiellen Zusammensetzung als Additiv zu einem Harz oder aufgrund der in situ-Herstellung in einem vorgelegten Harz, wird demnach eine Harzsuspension, auf der Basis eines Formaldehyd-Harzes bereitgestellt, die antimikrobielle Eigenschaften aufweist.

Die Menge des dem Harz zugegebenen Wirkstoffs bzw. Biozids wird so eingestellt, dass die Harzsuspension zwischen 1 bis 5 Gew%, bevorzugt zwischen 2 bis 3 Gew% Biozid bezogen auf das Festharz aufweist.

Diese antimikrobiell wirksame Harzsuspension kann zur Beschichtung von Trägermaterialien, insbesondere von Papierlagen, wie Dekor- oder Overlaypapierlagen, oder insbesondere von Holzwerkstoffplatten, wie Spanplatten, mitteldichten Faser (MDF)-, hochdichten Faser (HDF)- oder Grobspan (OSB)-Platten, Sperrholzplatten oder eine Kunststoff-Komposit-Platten (WPC) verwendet werden.

Entsprechend wird auch ein Verfahren zur Herstellung eines mit einer antiviralen Wirkung versehenen Papierlage oder Holzwerkstoffplatte bereitgestellt, wobei die mindestens eine Papierlage oder Holzwerkstoffplatte mit mindestens einer Beschichtung, insbesondere als Oberflächenbeschichtung, versehen wird, wobei die mindestens eine Beschichtung mindestens eine oben beschriebene harzhaltige Zusammensetzung umfasst. Der Auftrag der Harzsuspension auf eine Holzwerkstoffplatte erfolgt typischerweise mittels Walzen, und der Auftrag der Harzsuspension auf eine Papierlage mittels eines Rasterwerks.

Es wird demnach ein Verfahren bereitgestellt, mit welchem eine Oberflächenschichtung von verschiedenen Trägermaterialien wie Holzwerkstoffplatten oder Papierlagen ermöglicht wird, die über antimikrobielle, biozide Eigenschaften, insbesondere antivirale Eigenschaften, verfügt. Das mit diesem Verfahren bereitgestellte Trägermaterial weist somit mindestens eine antiviral wirksame Beschichtung, insbesondere mindestens eine antiviral wirksame Oberflächenbeschichtung, auf.

In einer Ausführungsform wird als Papierlage eine Dekorpapier- oder Overlaypapierlage verwendet.

In diesem Fall ermöglicht das vorliegende Verfahren die Herstellung eines antiviral wirksamen Imprägnats. Hierbei wird in einer Variante zunächst eine Dekorpapierlage oder eine Overlaypapierlage mit wenigstens einer flüssigen oder pulverförmigen Harzzusammensetzung imprägniert. Anschließend wird auf mindestens eine Außenseite der imprägnierten Papierlage mindestens eine Beschichtung umfassend mindestens ein Formaldehyd-Harz, insbesondere ein Melamin-Formaldehyd-Harz, und mindestens eine Zusammensetzung herstellbar aus mindestens einer Verbindung der allgemeinen Formel (I), mindestens einer Verbindung der allgemeinen Formel (II) und mindestens einem antimikrobiellen Wirkstoff, insbesondere mindestens ein Biozid aufgebracht.

Das mit dem vorliegenden Verfahren hergestellte Imprägnat weist somit den folgenden Schichtaufbau auf:
- mindestens eine mit einem Harz imprägnierte Papierlage, insbesondere eine Dekorpapierlage oder eine Overlaypapierlage; und
- mindestens eine auf der mindestens einen imprägnierten Papierlage vorgesehene antiviral wirksame Beschichtung.

Vorliegend ist unter dem Begriff der "Imprägnierung" eine vollständige oder teilweise Durchtränkung der Papierlage mit dem Harz zu verstehen. Derartige Imprägnierungen können z.B. in einem Imprägnierbad, durch Walzen, durch Rasterwalzen, durch Aufrakeln oder auch durch Besprühen aufgebracht werden.

Wie erwähnt kommen als Papierlagen z.B. Overlay-, Dekor-, oder Kraftpapiere zum Einsatz. Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen. Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

Die Papierlagen werden in zwei Stufen imprägniert. Dabei erfolgt zunächst eine Kernimprägnierung mit einem Standardharz (Melamin- oder Harnstoffharz oder Gemische der beiden Harze) mit Zwischentrocknung . Anschließend erfolgt z. B. in einem Rasterwerk der Auftrag eines Melaminharzes auf die Oberseite des Imprägnates mit dem entsprechenden Wirkstoff im Harz. Danach schließt sich wiederum ein Trocknungsschritt an. Anschließend wird das so vorbehandelte Imprägnat zu dem benötigten Zwischen- oder Endprodukt weiterverarbeitet. Es kann sich dabei um eine Direktbeschichtung für Möbel-, Inneneinrichtungs- oder Bodenbelagsanwendungen handeln. Es können auch Laminate hergestellt werden, die dann ebenfalls für die oben beschriebenen Anwendungen genutzt werden können.

In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 55 Gew% imprägniert. Nach dem Durchlauf einer Atemstrecke erfolgt eine Tauchimpägnierung mit einem Harz. Das Imprägnat durchläuft dann einen Trockenkanal, wobei es auf eine Restfeuchte von 15-20 % zurückgetrocknet wurde. In einem zweiten Imprägnierschritt wird ein Harz mit einem Feststoffgehalt zwischen 50 und 70 Gew%, bevorzugt 55 Gew% enthaltend die antimikrobielle Zusammensetzung aufgetragen. Es erfolgt ein weiterer Trocknungsschritt auf eine Restfeuchte von ca. 6%. Das Imprägnat kann dann in üblicher Weise mit einer Holzwerkstoffplatte z.B. in einer Kurztaktpresse verpresst werden.

Es ist auch möglich das mit der antiviral wirksamen Beschichtung versehene Imprägnat mit weiteren Papierlagen zu verpressen. So kann in einer bevorzugten Ausführungsform die eine mit der antiviral wirksamen Beschichtung versehene Overlaypapierlage mit mindestens einer (nicht mit dem modifizierten Harz imprägnierten) Dekorpapierlage, mindestens einer imprägnierter Kraftpapierlage und mindestens eine Transparentpapierlagen (Pergamin) verpresst werden. Ein derartiger Schichtaufbau kann von oben nach unten wie folgt aussehen: eine mit der antiviral wirksamen Beschichtung versehene Overlaypapierlage, eine (nicht mit dem modifizierten Harz imprägnierte) Dekorpapierlage, optional eine Pergaminlage, eine mit dem modifizierten Harz imprägnierte Kraftpapierlage, und eine Pergaminlage. Das so hergestellte (flexible) Laminat kann anschließend mit einer Holzwerkstoffplatte verpresst oder auf die Holzwerkstoffplatte aufgeklebt werden.

In einer anderen Ausführungsform wird als Holzwerkstoffplatte bevorzugt eine Spanplatte, eine mitteldichte Faser (MDF)-, hochdichte Faser (HDF)- oder Grobspan (OSB)-Platte, Sperrholzplatte oder eine Kunststoff-Komposit-Platte (WPC) verwendet.

In diesem Fall ermöglicht das vorliegende Verfahren die Herstellung eines antiviral wirksamen Laminates.

Hierbei wird in einer Variante zunächst eine mindestens eine Dekorschicht auf die mindestens eine Holzwerkstoffplatte aufgebracht, gefolgt von einer von mindestens einer antiviral wirksamen Beschichtung umfassend mindestens ein Formaldehyd-Harz, insbesondere ein Melamin-Formaldehyd-Harz, und mindestens eine Zusammensetzung herstellbar aus mindestens einer Verbindung der allgemeinen Formel (I), mindestens einer Verbindung der allgemeinen Formel (II) und mindestens einem antimikrobiellen Wirkstoff, insbesondere mindestens einem Biozid. Dieser Schichtaufbau wird anschließend unter Ausbildung eines Laminates verpresst.

Das mit dem vorliegenden Verfahren hergestellte Laminat weist somit den folgenden Schichtaufbau auf:
- mindestens eine Holzwerkstoffplatte;
- mindestens eine auf der Holzwerkstoffplatte vorgesehene Dekorschicht, insbesondere in Form eines Direktdrucks oder einer Dekorpapierlage, und
- mindestens eine auf der mindestens einen Dekorschicht vorgesehene antiviral wirksame (harzhaltige) Beschichtung.

In einer Ausführungsvariante wird die Dekorschicht auf eine Holzwerkstoffplatte als Trägermaterial im Direktdruck oder als Dekorpapierlage aufgebracht. Anschließend kann auf die Dekorschicht eine antiviral wirksame flüssige Harzschicht umfassend mindestens ein Formaldehyd-Harz, insbesondere ein Melamin-Formaldehyd-Harz, und mindestens eine Zusammensetzung herstellbar aus mindestens einer Verbindung der allgemeinen Formel (I) und mindestens einem antimikrobiellen Wirkstoff, insbesondere mindestens ein Biozid, aufgebracht werden. Es ist auch möglich eine mit der antiviral wirksamen Beschichtung versehenen Papierlage als Abdeckschicht aufzubringen. Dies kann z.B. ein oben bereits beschriebenes Overlayimprägnat sein.

Entsprechend dient das vorliegende Verfahren der Herstellung eines antiviral wirksamen Laminats zur Anwendung als Boden-, Wand- oder Deckenbelag sowie Möbel mit einem Träger für eine direkt auf dem Träger angebrachten Dekorschicht oder einer separat auf dem Träger angeordneten Dekorlage und einer direkt auf der Dekorschicht angebrachten Abdeckschicht oder einer auf der Dekorlage angeordneten Abdecklage, die gemeinsam unter Wirkung von Druck und Temperatur miteinander zu dem Laminat verpresst werden, wobei die oben genannten Aufbauten mindestens in der äußeren Schicht oder der äußeren Lage ein antiviral wirksames Melamin-Formaldehydharz aufweisen.

Die Presstemperatur ist dabei abhängig vom Material des Trägermaterials. Im Falle von Holzfaserplatten, wie MDF- oder HDF-Platten, oder auch bei Spanplatten liegt die Presstemperatur in einem Bereich zwischen 170 und 230°c, bevorzugt 190 und 200°C. Im Falle von Kunststoff-Komposit-Platte (WPC) müssen allerdings die Presstemperaturen um 30 - 40 °C reduziert werden. So liegt die Presstemperatur bei WPC-Platten in einem Bereich zwischen 130 und 180°c, z.B. bei 150°C.

Wie erwähnt, kann in einer bevorzugten Ausführungsform die harzhaltige antimikrobielle Zusammensetzung auf eine bedruckte Holzwerkstoffplatte aufgetragen werden.

Hierzu wird eine Holzwerkstoffplatte bzw. Trägerplatte zunächst mit einer Harzgrundierung versehen, auf welcher mindestens eine Grundierungsschicht aufgetragen wird. Die dabei bevorzugt verwendete Grundierungsschicht umfasst eine Zusammensetzung aus Kasein oder Sojaprotein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein oder Sojaprotein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

In einer weiteren Ausführungsvariante wird auf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet.

Auf die Dekorschicht werden Abdeckschichten mit oder ohne Zusätze aufgetragen, die in Menge und Zusammensetzung variieren können.

So können in einer Variante folgende Aufträge erfolgen:
- Auftragen von mindestens einer ersten Harzschicht auf die mindestens eine Dekorschicht auf der Oberseite der Holzwerkstoffplatte, wobei die erste Harzschicht einen Feststoffgehalt zwischen 60 und 80 Gew%, bevorzugt 65 Gew% aufweist;
- Trocknen des Aufbaus aus erster Harzschicht in mindestens einer Trocknungsvorrichtung;
- Auftragen von mindestens einer zweiten Harzschicht auf die Oberseite und optional auf die Unterseite der Holzwerkstoffpatte, wobei die zweite Harzschicht einen Feststoffgehalt zwischen 60 und 80 Gew%, bevorzugt 65 Gew% aufweist;
- optional gleichmäßiges Aufstreuen von abriebfesten Partikeln auf die zweite Harzschicht auf der Oberseite der Holzwerkstoffplatte;
- anschließendes Trocknen der zweiten Harzschicht mit den optionalen abriebfesten Partikeln in mindestens einer Trocknungsvorrichtung;
- Auftragen von mindestens einer dritten und einer vierten Harzschicht, wobei die dritte einen Feststoffgehalt zwischen 50 und 70 Gew%, bevorzugt 60 Gew% aufweist,
- anschließendes Trocknen der aufgetragenen dritten Harzschicht in mindestens einer weiteren Trocknungsvorrichtung;
- Auftragen von mindestens vierten Harzschicht, wobei die vierte Harzschicht einen Feststoffgehalt zwischen 50 und 70 Gew%, bevorzugt 60 Gew% aufweist;
- anschließendes Trocknen der aufgetragenen vierten Harzschicht in mindestens einer weiteren Trocknungsvorrichtung;
- Auftragen von mindestens einer Harzsuspension mit einem Feststoffgehalt zwischen 50 und 70 Gew%, bevorzugt 55 Gew% umfassend die erfindungsgemäße antimikrobielle Zusammensetzung,
- anschließendes Trocknen der aufgetragenen Harzsuspension in mindestens einer weiteren Trocknungsvorrichtung; und
- Verpressen des Schichtaufbaus in einer Kurztaktpresse.

In einer Ausführungsform können mit der dritten, vierten und/oder fünften Harzschicht Glaskugeln aufgebracht werden, die als Abstandshalter fungieren. Die bevorzugt verwendeten Glaskugeln weisen einen Durchmesser von 80-100 µm auf. Die Menge an Glaskugeln beträgt 10 bis 50 g/m², bevorzugt 10 bis 30 g/m², insbesondere bevorzugt 15 bis 25 g/m². Der Ansatz besteht bevorzugt aus ca. 40 kg Harz flüssig plus Glaskugeln und Hilfsstoffe. Die Glasperlen können ebenfalls in silanisierter Form vorliegen. Durch die Silanisierung der Glasperlen wird die Einbettung der Glasperlen in die Harzmatrix verbessert.

Wie oben ebenfalls bereits erwähnt, können auf die Holzwerkstoffplatte abriebfeste Partikel, wie z.B. Partikel aus Korund (Aluminiumoxide), Borcarbide, Siliziumdioxide, Siliziumcarbide, aufgestreut werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA-Standard). In einer Variante werden als abriebfeste Partikel Edelkorund weiß F230 verwendet.

Die Trocknung der Harzschichten erfolgt bei Trockner-Temperaturen zwischen 150 und 220°C, bevorzugt zwischen 180 und 210°C, insbesondere in einem Konvektionstrockner. Die Temperatur wird an die jeweiligen Harzschichten angepasst und kann in den einzelnen Konvektionstrocknern variieren. Anstatt von Konvektionstrocknern können aber auch andere Trockner zum Einsatz kommen.

In dem sich an den letzten Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt bei 160°C und einem Druck zwischen 30 und 60 kg/cm². Die Presszeit liegt zwischen 10 bis 20 sec, bevorzugt zwischen 12 bis 14 sec.

Die Erfindung wird nachfolgend unter Bezugnahme an Ausführungsbeispielen näher erläutert.

### Ausführungsbeispiel 1: ein erstes antimikrobielles Additiv AV-1

Es handelt sich hier um ein wässriges Additiv, welches in der Produktion ins Harz gemischt werden kann.

Beschreibung der Herstellung des Additivs AV-1: Vorlage von 214 g Glycidyloxypropyltriethoxysilan in einem Rührkolben. Zugabe von 9 g 10 % iger Essigsäure. Nach einer Rührzeit von 10 Minuten bei Raumtemperatur werden 10 g Titanisobutylat hinzugegeben und weitere 10 Minuten gerührt. Anschließend erfolgt eine Zugabe von 391 g Kieselsol CS 30 716P. Das Gemisch erwärmt sich durch Hydrolyse auf ca. 60 °C und wird nun auf 80 °C erwärmt und am Rückfluss gekocht. Nach ca. 50 Minuten erfolgt eine Zugabe von Benzalkoniumchlorid in Wasser (20%ige Lösung) sowie die Zugabe von 8 g Aminoethylaminopropyltriethoxysilan. Das Hyrolysat wird weitere 60 Minuten bei 80 °C unter Rückfluss gekocht. Anschließend wird das Gemisch mit weiteren 85 g Wasser verdünnt und mit Hilfe eines Rotationsverdampfers wird der bei der Hydrolyse entstehende Ethanol entfernt. Nach dem Entfernen des Alkohols hat das Gemisch einen Flammpunkt von über 85 °C. Dieses Additiv kann nun zum fertigen Melaminharz hinzugegeben werden.

### Ausführungsbeispiel 2: ein zweites antimikrobielles Additiv AV-2

Es handelt sich hier um ein wässriges Additiv mit Restalkohol, welches in der Produktion ins Harz gemischt werden kann.

Beschreibung der Herstellung des Additivs AV-2: Vorlage von 59,7 g Glycidyloxypropyltriethoxysilan und 10,91 g Tetraethoxysilan in einem Rührkolben. Zugabe einer Mischung bestehend aus 30,98 g H₂O, 5 g Ethanol und 2,24 g para-Toluolsulfonsäure. Das Gemisch erwärmt sich auf ca. 55 °C und wird ca. 60 Minuten weiter gerührt. Ein Teil des bei der Hydrolyse entstehenden Alkohols wird nach 12 Stunden Standzeit mit Hilfe eines Rotationverdampfers entfernt. Das Gewicht des Gemischs wird dabei um 17 Gew. % reduziert. Zu 10 g dieses Hydrolysates werden nun weitere 10 g H₂O und 0,352 g para-Toluolsulfonsäure hinzugeben. Mit Hilfe eines Dispergier-Rührers werden nun 0,51g Chitosan in diesem Gemisch gelöst. Nach einer 10-minütigen Rührzeit wird ein transparentes, hochviskoses Additiv erhalten, welches nun zum fertigen Harz hinzugegeben werden kann.

### Ausführungsbeispiel 3: ein drittes antimikrobielles Additiv AV-3

Es handelt sich hier um ein wässriges Additiv mit Restalkohol, welches in der Produktion ins Harz gemischt werden kann.

Beschreibung der Herstellung des Additivs AV-3: Vorlage von 20,0 g Glycidyloxypropyltriethoxysilan und 12,8 g Tetraethoxysilan in einem Rührkolben. Zugabe einer Mischung bestehend aus 18,1 g H₂O, 2 g Ethanol und 0,76 g para-Toluolsulfonsäure. Das Gemisch erwärmt sich auf ca. 55 °C und wird ca. 60 Minuten weiter gerührt. Unter Rückfluss wird da Gemisch nun auf 80 °C erhitzt und nach 60 Minuten werden 8,4 g Phenylphenol der Mischung hinzugegeben. Das Hydrolysat wird nun weitere 60 Minuten bei 80 °C gekocht. Ein Teil des bei der Hydrolyse entstehenden Alkohols wird nach 12 Stunden Standzeit mit Hilfe eines Rotationverdampfers entfernt. Das Gewicht des Gemischs wird dabei um 12 Gew. % reduziert. Man erhält ein transparentes Additiv, welches nun zum fertigen Harz hinzugegeben werden kann.

### Ausführungsbeispiel 4: ein viertes antimikrobielles Additiv AV-4

Es handelt sich hier um ein Additiv, welches im Harz (in situ) hergestellt wird und daher nicht als eigenständiges Additiv verwendet werden kann.

Beschreibung der Herstellung des Additivs AV-4: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 5,2 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 2,91 g Kupfersulfat und 9,8 g Kieselsol CS 20 516 P hinzugegeben und weitere 12 Stunden gerührt. Man erhält ein transluzentes, leicht bläuliches modifiziertes Harz.

### Ausführungsbeispiel 5: ein fünftes antimikrobielles Additiv AV-5

Es handelt sich hier um ein Additiv, welches im Harz (in situ) hergestellt wird und daher nicht als eigenständiges Additiv versendet werden kann.

Beschreibung der Herstellung des Additivs AV-5: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 5,2 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 1,99 g Kupfersulfat und 9,8 g Kieselsol 200 B 30 hinzugegeben und weitere 12 Stunden gerührt. Man erhält ein transluzentes, leicht gräulich modifiziertes Harz.

### Ausführungsbeispiel 6: ein sechstes antimikrobielles Additiv AV-6

Es handelt sich hier um ein Additiv, welches im Harz (in situ) hergestellt wird und daher nicht als eigenständiges Additiv versendet werden kann.

Beschreibung der Herstellung des Additivs AV-6: Vorlage von 215 g Melaminharz (Lieferung aus Heiligengrabe) in einem Rührkolben. Zugabe einer Mischung bestehend aus: 8,0 g Glycidyloxypropyltriethoxysilan, 7,1 g Tetraethoxysilan sowie 10,4 g Aminoethylaminopropyltriethoxysilan sowie einer Mischung bestehend aus 12,2 g H₂O, 0,44 g para-Toluolsulfonsäure. Das Gemisch wird auf ca. 45 g erwärmt und 60 Minuten weiter gerührt. Anschließend wird nun 5,82 g Kupfersulfat und 22,1 g Kieselsol CS 20 516 P hinzugegeben und weitere 24 Stunden gerührt. Man erhält ein transluzentes, leicht bläuliches modifiziertes Harz.

### Ausführungsbeispiel 7: Aufbringen der erfindungsgemäßen Zusammensetzung auf ein Dekorpapier

An einem Imprägnierkanal wurde ein Dekorpapier (Flächengewicht: 70 g/m², Breite: 2070 mm) in einem ersten Imprägnierschritt mit einem wässrigen Melaminharz (Feststoffgehalt: 55 Gew% ) in einer Menge von 130 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten.

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten ( 2,8 bzw.5,6 x 2,07 m ) bzw. aufgerollt. Anschließend wurden Formate in einer Kurztaktpresse auf Spanplatten aufgepresst, wobei eine Nullprobe ohne Wirkstoff in der Oberfläche mitgeprüft wurde. Die Pressparameter waren: Pressdruck 40 kg/cm², Presstemperatur: 190°C, Presszeit: 15 sec.

An den beschichteten Platten wurden die üblichen Prüfungen, die im Rahmen der Qualitätssicherung festgelegt sind, durchgeführt.

| Prüfung* | Nullprobe | Variante 1 | Variante 2 | Variante 3 | Variante 4 | Variante 5 | Variante 6 |
|---|---|---|---|---|---|---|---|
| Säuretest** | Stufe 1 | Stufe 1 | Stufe 1 | Stufe 1 | Stufe 1 | Stufe 1 | Stufe 1 |
| Kratztest | Grad 3 | Grad 3 | Grad 3 | Grad 3 | Grad 4 | Grad 4 | Grad 4 |
| Wasser-Dampftest | o. B | o. B. | o. B. | o. B. | o. B. | o. B. | o. B. |
| Fleckenunempfindlichkeit | Stufe 4 | Stufe 4 | Stufe 4 | Stufe 5 | Stufe 4 | Stufe 5 | Stufe 5 |

| | | | | | | | |
|---|---|---|---|---|---|---|---|
| *Die Prüfungen wurden außer dem Säuretest gemäß der DIN EN 14323- 2017-07 durchgeführt ** Stufe 1: ohne Befund, Stufe 2: leichte Veränderung von Glanzgrad und/oder Farbe Stufe 3: starke Veränderung von Glanzgrad und/oder Farbe | | | | | | | |

### Wie aus der Tabelle zu entnehmen ist, wurden keine Auffälligkeiten gefunden.

Muster aus der Produktion wurden einem Prüflabor geschickt, um dort die "Prüfung von Flächengebilden und Materialien auf antivirale Aktivität mit einem unbehüllten Prüfvirus" durchführen zu lassen.

Dabei zeigte sich bei allen Prüfmustern bei der Prüfung in Anlehnung an Vorgaben der ISO 21702:2019-05 "Messung von antiviraler Aktivität auf Kunststoff- und anderen nicht-porösen Oberflächen" ein Wert der antiviralen Wirkung A (log10 PFU ) von >3 (ISO 18184:2014-09 Anhang G). Damit wird bei allen Prüfmustern eine signifikante Reduktion erreicht.

### Ausführungsbeispiel 8: Aufbringen der erfindungsgemäßen Zusammensetzung auf ein Overlay

An einem Imprägnierkanal wurde ein Overlay (Flächengewicht: 25 g/m², Breite: 2070 mm) in einem ersten Imprägnierschritt mit einem wässrigen Melaminharz (Feststoffgehalt: 55 Gew%) in einer Menge von 135 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten.

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten ( 2,8 bzw.5,6 x 2,07 m ) bzw. aufgerollt. Anschließend wurden Formate in einer Durchlaufpresse zu einem Schichtstoff verpresst. Dabei wurde folgender Aufbau verwendet:
- Overlayimprägnat mit antiviralem Wirkstoff ( siehe oben )
- Dekorimprägnat ( Papiergewicht: 70 g/m², Harzauftrag: 100 Gew% Melaminharz, VC-Wert: 5,6-6,0% )
- Kernlage (Unterlagsimprägnat NKP; Papiergewicht: 160 g/m², Harzauftrag: ca. 85 Gew% Mischharz, Zukauf )
- Pergament ( Papiergewicht: 50 g/m² )

Die Pressparameter waren: Vorschub: 8 m/min, Pressdruck 80 kg/cm², Presstemperatur: 190°C.

Das Laminat wurde anschließend auf eine 38 mm Spanplatte aufgeklebt ( Klebstoff: Harnstoff-Formaldehyd-Leim ), die einseitig mit einem Arbeitsplattenprofil versehen war und dann der Laminatüberstand um das beleimte Profil in einer Postforming-Straße verformt und angepresst wurde.

Das Laminat kann auch für vertikale Anwendungen genutzt werden. Dabei kann statt des Overlays ein Dekorimprägnat mit antiviraler Ausrüstung verwendet werden.

### Ausführungsbeispiel 9: Aufbringen der erfindungsgemäßen Zusammensetzung auf ein Overlay

An einem Imprägnierkanal wurde ein Overlay (Flächengewicht: 25 g/m², Breite: 2070 mm) in einem ersten Imprägnierschritt mit einem wässrigen Melaminharz (Feststoffgehalt: 55 Gew%) in einer Menge von 135 g/m² imprägniert. Die Produktionsgeschwindigkeit lag dabei bei 50 m/min. In dem Melaminharz waren die üblichen Hilfsstoffe (Härter, Netzmittel, Entschäumer usw.) enthalten. Nach dem Harzauftrag wird mit einer Streuvorrichtung Korund auf die Oberseite des Overlays aufgestreut. Es handelte sich dabei um F 230 ( FEPA-Standard ). Die Auftragsmenge lag bei 20 g/m².

Das Imprägnat hat dann einen Trockenkanal durchlaufen, wobei es auf eine Restfeuchte von 15 - 20 % zurückgetrocknet wurde.

Danach wurden in einem zweiten Imprägnierschritt mit Hilfe einer Rasterwalze 40 g Melaminharz fl./m² auf die Rückseite des Overlays aufgetragen. Dieses Harz enthielt 2 Gew% antiviralen Wirkstoff auf Festharz. Das Melaminharz hatte einen Feststoffgehalt von ca. 55 Gew%.

Das Imprägnat wird anschließend wieder in einem Schwebetrockner getrocknet. Dabei wird auf eine Restfeuchte von 5,5 - 6,0 Gew% getrocknet. Das Imprägnat wird dann auf Format geschnitten ( 2,8 bzw.5,6 x 2,07 m ) bzw. aufgerollt. Anschließend wurden die Formate in einer Kurztaktpresse zu einem Fussbodenaufbau für einen Laminatboden verpresst. Dabei wurde folgender Aufbau verwendet:
- Overlayimprägnat mit antiviralem Wirkstoff ( siehe oben )
- Dekorimprägnat ( Harzauftrag: 100 Gew% Melaminharz, VC-Wert: 5,6-6,0% )
- HDF, 8 mm
- Gegenzugimprägnat ( Papiergewicht: 80 g/m², Harzauftrag: 120 Gew% )

Die Pressparameter waren: Pressdruck 40 kg/cm², Presstemperatur: 190°C, Presszeit: 12 sec.

Das Overlay kann auch für einen Aufbau zur Herstellung von Fußboden verwendet werden, bei dem die HDF direktbedruckt worden ist. Dort wird dann statt des letzten Harzauftrages mit dem antiviralen Wirkstoff das Overlay verwendet.

### Ausführungsbeispiel 10: Aufbringen der erfindungsgemäßen Zusammensetzung auf eine Holzwerkstoffplatte

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe eines Umluft und/oder IR-Trockners durchgeführt. Danach wird ein Primer aufgetragen (Auftragsmenge 10 - 20 g fl/ m²). Dieser wird ebenfalls getrocknet. Auf diesen Primer wird dann im Tiefdruck- oder Digitaldruckverfahren ein Dekor aufgedruckt.

Anschließend wird eine Abdeckschicht aus Melaminharz aufgetragen (Auftragsmenge: 10 - 30 g Melaminharz fl./ m², Feststoffgehalt: 65 Gew%). Das Melaminharz enthält Glaskugeln (Durchmesser Glaskugeln: 80 - 100 µm, Auftragsmenge: 5 g Glaskugeln/m²) als Abstandshalter. Die Platten durchlaufen wiederum einen Trockner. Danach werden sie in einem Paternoster abgekühlt.

Die Platten werden dann an einer Produktionslinie auf der Oberseite mit Melaminharz (Auftragsmenge: 60 g Melaminharz fl./m², Feststoff: 65 Gew%.) beschichtet. Gleichzeitig wird auf der Rückseite ein Melaminharz als Gegenzug in der gleichen Menge ebenfalls mit Hilfe einer Walze aufgetragen. Dann erfolgt das Aufstreuen von Korund auf die Oberseite der Platte (Auftragsmenge: 20 g Korund/m², Korngröße: F230 nach FEPA-Standard). Der Aufbau wird abgelüftet oder in einem Trockner mit Hilfe von IR-Strahlern oder Umluft getrocknet. Anschließend werden noch zweimal 30 g Melaminharz fl./m² (Feststoffgehalt: 60 Gew%) mit Hilfe von Walzenauftragsaggregaten aufgetragen. Nach jedem Auftrag folgt eine Zwischentrocknung.

In einem letzten Walzenauftragswerk wurden mit Hilfe einer Rasterwalze 40 g Melaminharz fl./m² aufgetragen. Dieses Harz enthielt 2 Gew% antiviralen Wirkstoff auf Festharz. Das Melaminharz hatte einen Feststoffgehalt von ca. 55 Gew%.

Die Platten werden in einem Umlufttrockner getrocknet. Die Platten werden dann in eine Kurztaktpresse transferiert. Dort wird der Aufbau dann bei T=180°C, p=30 kg/cm² und t=14 sec verpresst. Es wurde ein Pressblech mit einer Büttenstruktur verwendet.

### Ausführungsbeispiel 11: Additiv AV-30

Es handelt sich hier um ein wässriges Additiv ohne Restalkohol, welches in der Produktion ins Harz gemischt werden kann. Alkohol kann in verschiedenen Anlagen, ab gewissen Konzentrationen zu Problemen bezüglich Explosionsschutz führen. Weiterhin ergibt sich bei einer Verarbeitung großer Mengen Anforderungen durch Emissionsvorschriften. Daher wurde versucht das Additiv auf Basis AV-3 derart zu verändern, dass ein rein wässrigen nicht brennbares Additiv entsteht.

### Beschreibung der Herstellung des Additivs AV-31:

Vorlage von 20,0 g Glycidyloxypropyltriethoxysilan und 12,8 g Tetraethoxysilan in einem Rührkolben. Zugabe einer Mischung bestehend aus 18,1 g H₂O und 0,44 g eines Ionentauschers (Lewatit 2629). Das Gemisch wird auf ca. 60 °C erwärmt und für ca. 120 Minuten weiter gerührt. Im Anschluss wird nun der Ionentauscher abgesiebt und das Gemisch unter Rückfluss auf 80 °C erhitzt. Nach 60 Minuten werden 10,7 g Phenylphenol (ca. 22,4 Gew. %) zugegeben und das Hydrolysat wird nun nach Zugabe einer Mischung aus 3,3 g demineralisiertem Wasser, 2,1 g Dipropylenglykolmonomethylether und 0,3 g Natriumdodecylbenzosulfonat weitere 60 Minuten bei 80 °C gehalten. Der bei der Hydrolyse entstehenden Alkohol wird nach 12 Stunden Standzeit mit Hilfe eines Rotationverdampfers entfernt (ca. 19 g). Der Flammpunkt dieses Additivs liegt nun bei > 85 °C. Dieses Additiv kann nun zu wässrigem Melaminharz hinzugegeben werden.

In Produktionsversuchen zeigte sich, dass bei nicht ausreichender Mischung (z.B. Standzeiten der Anlage oder nicht ausreichender Drehzahl beim Einmischen) zu Entmischungserscheinungen und somit zu optischen Inhomogenität kommen kann, die das optische Erscheinungsbild der Möbeloberfläche stark stören.

Laborversuche zeigten, dass dies vor allem an dem Gehalt des Phenylphenols liegt. Der maximale Gehalt des Phenylphenols ohne Entmischung liegt bei ≤ 20 Gew. %.

Um die Wirksamkeit des Additiv nicht zu senken und die Produktionssicherheit nicht zu gefährden, wurde der Gehalt des Phenylphenols daher leicht gesenkt und durch ein weiteres zugelassenes Biozid-Produkt (4-Chlor-3-Methylphenol) ersetzt.

### Ausführungsbeispiel 12: Additiv AV-34+

### Beschreibung der Herstellung des Additivs AV-34+:

Vorlage von 20,0 g Glycidyloxypropyltriethoxysilan und 12,8 g Tetraethoxysilan in einem Rührkolben. Zugabe einer Mischung bestehend aus 18,1 g H₂O und 0,44 g eines Ionentauschers (Lewatit 2629). Das Gemisch wird auf ca. 60 °C erwärmt und für ca. 120 Minuten weiter gerührt. Im Anschluss wird nun der Ionentauscher abgesiebt und das Gemisch unter Rückfluss auf 80 °C erhitzt. Nach 60 Minuten werden 9,56 g Phenylphenol (ca. 20 Gew. %) und 0,23 g 4-Chlor-3-Methylphenol (ca. 0,48 Gew. %) zugegeben und das Hydrolysat wird nun nach Zugabe einer Mischung aus 3,3 g demineralisiertem Wasser, 2,1 g Dipropylenglykolmonomethylether und 0,3 g Natriumdodecylbenzosulfonat weitere 60 Minuten bei 80 °C gehalten. Der bei der Hydrolyse entstehenden Alkohol wird nach 12 Stunden Standzeit mit Hilfe eines Rotationverdampfers entfernt (ca. 19 g). Der Flammpunkt dieses Additivs liegt nun bei > 85 °C. Dieses Additiv kann nun zu wässrigem Melaminharz hinzugegeben werden.

In Laborversuchen zeigte sich, dass durch diese geringe Zugabe des 4-Chlor-3-Methylphenols keine Geruchsbelästigung durch das neue Biozid entsteht. Erst bei einer Konzentration über 0,8 Gew. % kann das 4-Chlor-3-Metyhlphenol bei Verarbeitungstemperaturen über 150 °C geruchlich wahrgenommen werden.

Abgesehen von der Geruchsbelästigung können wir den Gehalt des 4-Chlor-3-Metyhlphenol auf bis zu auch 28 Gew. % steigern ohne eine Inhomogenität festzustellen.

Praxisversuche zeigen, dass es nun auch bei längeren Standzeiten zu keiner Inhomogenität in der Oberfläche kommt und eine Entmischung nicht beobachtet werden konnte.

### Antivirale Tests:

Die antiviralen Zusammensetzungen wurden nach ISO 217022:2019-05 " Messung von antivirale Aktivität auf Kunststoff- und anderen nicht-porösen Oberflächen" auf ihre antivirale Aktivität untersucht.

Die Ergebnisse ergaben für AV-1 bis AV-6 eine signifikante antivirale Aktivität in Bezug auf Bakteriophage MS2 (DSM 13767) mit einem log10 PFU über 4,5.

Auch in Bezug auf Bovine Coronavirus (BoCV) wurde eine Virus-Reduktion von 97,2 % nachgewiesen.

## Patentansprüche

1. Harzhaltige Zusammensetzung mit antimikrobiellen Eigenschaften, insbesondere antiviralen Eigenschaften, für Oberflächenbeschichtungen von Papierlagen oder Holzwerkstoffplatten, wobei die Zusammensetzung umfasst:
- mindestens ein Formaldehyd-Harz, insbesondere ein Melamin-Formaldehyd-Harz,
- mindestens eine Verbindung der allgemeinen Formel (I)
**R¹SiX₃** (I),
wobei
- X Alkoxy, ist, und
- R¹ ein organischer Rest ist ausgewählt aus der Gruppe umfassend C1-C10 Alkyl, die durch -O- oder -NH- unterbrochen sein können, und
- wobei R¹ mindestens eine funktionelle Gruppe Q₁ aufweist, die ausgewählt ist aus einer Gruppe enthaltend eine Amino-, Methacryl-, Methacryloxy-, Vinyl-, und Epoxid- Gruppe,
- mindestens eine weitere Verbindung der allgemeinen Formel (II)
**SiX₄** (II),
wobei X Alkoxy ist, und
- mindestens zwei Biozide.

2. Zusammensetzung nach Anspruch 1, **dadurch gekennzeichnet, dass** X ausgewählt ist aus einer Gruppe enthaltend, C₁₋₆-Alkoxy, insbesondere Methoxy, Ethoxy, n-Propoxy, i-Propoxy und Butoxy.

3. Zusammensetzung nach einem der vorhergehenden Ansprüche, **dadurch gekennzeichnet, dass** R¹ der Verbindung der allgemeinen Formel (I) ausgewählt ist aus einer Gruppe umfassend Methyl, Ethyl, Propyl, Pentyl, Hexyl, Heptyl, Octyl, die durch -O- oder -NH- unterbrochen sein können.

4. Zusammensetzung nach einem der vorhergehenden Ansprüche, **dadurch gekennzeichnet, dass** die mindesten eine funktionelle Gruppe Q1 der Verbindung der allgemeinen Formel (I) ausgewählt ist aus einer Gruppe enthaltend Epoxid-, Amino-, und Vinyl-Gruppe.

5. Zusammensetzung nach einem der vorhergehenden Ansprüche, **dadurch gekennzeichnet, dass** die mindestens zwei Biozide Phenylphenol und 4-Chlor-3-methylphenolsind.

6. Zusammensetzung nach einem der vorhergehenden Ansprüche, **gekennzeichnet durch** mindestens ein Alkoxytitanat, wie Tetraisopropylorthotitanat (Titanisopropylat) oder Tetraisobutylorthotitanat (Titanisobutylat).

7. Papierlage, bevorzugt Dekorpapierlage oder Overlaypapierlage, beschichtet mit mindestens einer harzhaltigen Zusammensetzung nach einem der Ansprüche 1 bis 6.

8. Verfahren zur Herstellung einer mit einer antiviralen Wirkung versehenen Papierlage nach Anspruch 7, wobei die mindestens eine Papierlage mit mindestens einer Beschichtung, insbesondere mindestens einer Oberflächenbeschichtung, umfassend eine harzhaltige Zusammensetzung nach einem der Ansprüche 1-6 versehen wird.

9. Verfahren nach Anspruch 8, **gekennzeichnet durch** die folgenden Schritte:
- Imprägnieren der mindestens einen Papierlage mit einer Harzsuspension;
- Aufbringen von mindestens einer antiviral wirksamen Beschichtung umfassend eine harzhaltige Zusammensetzung nach einem der Ansprüche 1-6 auf die mindestens eine imprägnierte Papierlage, bevorzugt in einem Rasterwerk; und
- Trocknen der Papierlage unter Ausbildung eines Imprägnates.

10. Holzwerkstoffplatte beschichtet mit mindestens einer harzhaltigen Zusammensetzung nach einem der Ansprüche 1 bis 6.

11. Verfahren zur Herstellung einer mit einer antiviralen Wirkung versehenen Holzwerkstoffplatte nach Anspruch 10, wobei die mindestens eine Holzwerkstoffplatte mit mindestens einer Beschichtung, insbesondere mindestens einer Oberflächenbeschichtung, umfassend eine harzhaltige Zusammensetzung nach einem der Ansprüche 1-6 versehen wird.

12. Verfahren nach Anspruch 11, **dadurch gekennzeichnet, dass** die mindestens eine Holzwerkstoffplatte, insbesondere bevorzugt eine Holzspanplatte, mitteldichte Faser (MDF)-, hochdichte Faser (HDF)- oder Grobspan (OSB)-Platte, Sperrholzplatte oder eine Kunststoff-Komposit-Platte (WPC) ist.

13. Verfahren nach einem der Ansprüche 11-12, **gekennzeichnet durch** die folgenden Schritte:
- Aufbringen von mindestens einer Dekorschicht, insbesondere in Form eines Direktdrucks oder einer Dekorpapierlage auf die mindestens eine Holzwerkstoffplatte;
- Aufbringen von mindestens einer antiviral wirksamen Beschichtung umfassend eine harzhaltige Zusammensetzung nach einem der Ansprüche 1-6 auf die mindestens eine Dekorschicht;
- Verpressen des Schichtaufbaus unter Ausbildung eines Laminates.

14. Verfahren nach Anspruch 13, **gekennzeichnet durch** die folgenden Schritte:
- Auftragen von mindestens einer ersten Harzschicht auf die mindestens eine Dekorschicht auf der Oberseite der Holzwerkstoffplatte, wobei die erste Harzschicht einen Feststoffgehalt zwischen 60 und 80 Gew%, bevorzugt 65 Gew% aufweist;
- Trocknen des Aufbaus aus erster Harzschicht in mindestens einer Trocknungsvorrichtung;
- Auftragen von mindestens einer zweiten Harzschicht auf die Oberseite und optional auf die Unterseite der Holzwerkstoffpatte, wobei die zweite Harzschicht einen Feststoffgehalt zwischen 60 und 80 Gew%, bevorzugt 65 Gew% aufweist;
- optional gleichmäßiges Aufstreuen von abriebfesten Partikeln auf die zweite Harzschicht auf der Oberseite der Holzwerkstoffplatte;
- anschließendes Trocknen der zweiten Harzschicht mit den optionalen abriebfesten Partikeln in mindestens einer Trocknungsvorrichtung;
- Auftragen von mindestens einer dritten und einer vierten Harzschicht, wobei die dritte einen Feststoffgehalt zwischen 50 und 70 Gew%, bevorzugt 60 Gew% aufweist,
- anschließendes Trocknen der aufgetragenen dritten Harzschicht in mindestens einer weiteren Trocknungsvorrichtung;
- Auftragen von mindestens vierten Harzschicht, wobei die vierte Harzschicht einen Feststoffgehalt zwischen 50 und 70 Gew%, bevorzugt 60 Gew% aufweist;
- anschließendes Trocknen der aufgetragenen vierten Harzschicht in mindestens einer weiteren Trocknungsvorrichtung;
- Auftragen von mindestens einer Harzsuspension mit einem Feststoffgehalt zwischen 50 und 70 Gew%, bevorzugt 55 Gew% umfassend die harzhaltige Zusammensetzung nach einem der Ansprüche 1-6;
- anschließendes Trocknen der aufgetragenen Harzsuspension in mindestens einer weiteren Trocknungsvorrichtung; und
- Verpressen des Schichtaufbaus in einer Kurztaktpresse.

15. Verfahren nach einem der Ansprüche 13-14, **dadurch gekennzeichnet, dass** der Pressschritt in einer Kurztaktpresse bei Temperaturen zwischen 150 und 250°C, bevorzugt bei 160°C und einem Druck zwischen 30 und 60 kg/cm² erfolgt.

## Claims

1. A resin-containing composition having antimicrobial properties, in particular antiviral properties, for surface coatings of paper layers or wood-based panels, the composition comprising:
- at least one formaldehyde resin, in particular a melamine-formaldehyde resin,
- at least one compound of the general formula (I)
**R¹SiX₃** (I),
whereby
- X is alkoxy, and
- R¹ is an organic moiety selected from the group comprising C1-C10 alkyl, which may be interrupted by -O- or -NH-, and
- wherein R¹ comprises at least one functional moiety Q¹ selected from a group comprising an amino, methacrylic, methacryloxy, vinyl and epoxy moiety,
- at least one further compound of the general formula (II)
**SiX₄** **(II),**
where X is alkoxy, and
- at least two biocides.

2. Composition according to claim 1, **characterized in that** X is selected from a group comprising C₁₋₆ -alkoxy, in particular methoxy, ethoxy, n-propoxy, i-propoxy and butoxy.

3. Composition according to one of the preceding claims, **characterized in that** R¹ of the compound of the general formula (I) is selected from a group comprising methyl, ethyl, propyl, pentyl, hexyl, heptyl, octyl, which may be interrupted by -O- or -NH-.

4. Composition according to one of the preceding claims, **characterized in that** the at least one functional moiety Q1 of the compound of the general formula (I) is selected from a group comprising epoxide, amino and vinyl moiety.

5. Composition according to one of the preceding claims, **characterized in that** the at least two biocides are phenylphenol and 4-chloro-3-methylphenol.

6. Composition according to one of the preceding claims, **characterized by** at least one alkoxytitanate, such as tetraisopropyl orthotitanate (titanium isopropylate) or tetraisobutyl orthotitanate (titanium isobutylate).

7. A paper layer, preferably a decorative paper layer or an overlay paper layer, coated with at least one resin-containing composition according to any one of claims 1 to 6.

8. A method for producing a paper layer provided with an antiviral effect according to claim 7, wherein the at least one paper layer is provided with at least one coating, in particular at least one surface coating, comprising a resin-containing composition according to one of claims 1-6.

9. Method according to claim 8, **characterized by** the following steps:
- Impregnation of at least one paper layer with a resin suspension;
- Application of at least one antivirally active coating comprising a resin-containing composition according to any one of claims 1-6 to the at least one impregnated paper layer, preferably in an anilox mill; and
- Drying of the paper layer to form an impregnate.

10. A wood-based panel coated with at least one resin-containing composition according to one of claims 1 to 6.

11. A method for producing a wood-based panel provided with an antiviral effect according to claim 10, wherein the at least one wood-based panel is provided with at least one coating, in particular at least one surface coating, comprising a resin-containing composition according to any one of claims 1-6.

12. Method according to claim 11, **characterized in that** the at least one wood-based panel is, in particular preferably, a chipboard, medium-density fibre (MDF), high-density fibre (HDF) or coarse chipboard (OSB) panel, plywood panel or a plastic composite panel (WPC).

13. Method according to one of claims 11-12, **characterized by** the following steps:
- Application of at least one decorative layer, in particular in the form of direct printing or a decorative paper layer, to the at least one wood-based panel;
- Application of at least one antivirally effective coating comprising a resin-containing composition according to any one of claims 1-6 to the at least one decorative layer;
- Pressing the layer structure to form a laminate.

14. Method according to claim 13, **characterized by** the following steps:
- Application of at least one first resin layer to the at least one decorative layer on the upper side of the wood-based panel, the first resin layer having a solids content of between 60 and 80% by weight, preferably 65% by weight;
- Drying the structure of the first resin layer in at least one drying device;
- Application of at least one second resin layer to the upper side and optionally to the underside of the wood-based panel, the second resin layer having a solids content of between 60 and 80% by weight, preferably 65% by weight;
- optional even scattering of abrasion-resistant particles on the second resin layer on the top side of the wood-based panel;
- subsequent drying of the second resin layer with the optional abrasion-resistant particles in at least one drying device;
- Application of at least a third and a fourth resin layer, the third having a solids content of between 50 and 70% by weight, preferably 60% by weight,
- subsequent drying of the applied third resin layer in at least one further drying device;
- Application of at least a fourth resin layer, the fourth resin layer having a solids content of between 50 and 70% by weight, preferably 60% by weight;
- subsequent drying of the applied fourth resin layer in at least one further drying device;
- Application of at least one resin suspension having a solids content of between 50 and 70% by weight, preferably 55% by weight, comprising the resin-containing composition according to any one of claims 1-6;
- subsequent drying of the applied resin suspension in at least one further drying device; and
- Pressing the layer structure in a short-cycle press.

15. Process according to one of claims 13-14, **characterized in that** the pressing step is carried out in a short-cycle press at temperatures between 150 and 250°C, preferably at 160°C and a pressure between 30 and 60 kg/cm².

## Revendications

1. Composition contenant de la résine avec des propriétés antimicrobiennes, en particulier des propriétés antivirales, pour des revêtements de surface de strates de papier ou de panneaux dérivés du bois, dans laquelle la composition comprend :
- au moins une résine de formaldéhyde, en particulier une résine de mélamine-formaldéhyde,
- au moins un composé de la formule générale (I)
**R¹SiX₃** **(I),**
dans laquelle
-- X est un alcoxy, et
-- R¹ est un radical organique choisi parmi le groupe comprenant un alkyle en C1-C10, qui peut être interrompu par -O- ou -NH-, et
-- dans laquelle R¹ présente au moins un groupe fonctionnel Q₁, qui est choisi parmi un groupe contenant un groupe amino, méthacrylique, méthacryloxy, vinyle et époxyde,
- au moins un autre composé de la formule générale (II),
**SiX₄** **(II),**
dans laquelle X est un alcoxy, et
- au moins deux biocides.

2. Composition selon la revendication 1, **caractérisée en ce que** X est choisi parmi un groupe contenant un alcoxy en C₁-C₆, en particulier du méthoxy, de l'éthoxy, du n-propoxy, de l'i-propoxy et du butoxy.

3. Composition selon l'une quelconque des revendications précédentes, **caractérisée en ce que** R¹ du composé de la formule générale (I) est choisi parmi un groupe comprenant du méthyle, de l'éthyle, du propyle, du pentyle, de l'hexyle, de l'heptyle, de l'octyle, qui peuvent être interrompus par -O- ou -NH-.

4. Composition selon l'une quelconque des revendications précédentes, **caractérisée en ce que** l'au moins un groupe fonctionnel Q1 du composé de la formule générale (I) est choisi parmi un groupe contenant un groupe époxyde, amino et vinyle.

5. Composition selon l'une quelconque des revendications précédentes, **caractérisée en ce que** les au moins deux biocides sont du phénylphénol et du 4-chloro-3-méthylphénol.

6. Composition selon l'une quelconque des revendications précédentes, **caractérisée par** au moins un titanate alcoxy, comme du tétraisopropyl orthotitanate (isopropylate de titane) ou du tétraisobutyl orthotitanate (isobutylate de titane).

7. Strate de papier, de manière préférée strate de papier décoratif ou strate de papier de recouvrement, revêtue d'au moins une composition contenant de la résine selon l'une quelconque des revendications 1 à 6.

8. Procédé de fabrication d'une strate de papier pourvue d'une action antivirale selon la revendication 7, dans lequel l'au moins une strate de papier est pourvue d'au moins un revêtement, en particulier d'un revêtement de surface, comprenant une composition contenant de la résine selon l'une quelconque des revendications 1 - 6.

9. Procédé selon la revendication 8, **caractérisé par** les étapes suivantes :
- l'imprégnation de l'au moins une strate de papier d'une suspension de résine ;
- l'application d'au moins un revêtement à action antivirale comprenant une composition contenant de la résine selon l'une quelconque des revendications 1 - 6 sur l'au moins une strate de papier imprégnée, de manière préférée en un maillage ; et
- le séchage de la strate de papier en réalisant un imprégnat.

10. Panneau en matériau dérivé du bois revêtu d'au moins une composition contenant de la résine selon l'une quelconque des revendications 1 à 6.

11. Procédé de fabrication d'un panneau en matériau dérivé du bois pourvu d'une action antivirale selon la revendication 10, dans lequel l'au moins un panneau en matériau dérivé du bois est pourvu d'au moins un revêtement, en particulier d'au moins un revêtement de surface, comprenant une composition contenant de la résine selon l'une quelconque des revendications 1-6.

12. Procédé selon la revendication 11, **caractérisé en ce que** l'au moins un panneau de matériau dérivé du bois est en particulier de manière préférée un panneau de particules, un panneau MDF (panneau de fibres à densité moyenne), un panneau HDF (panneau de fibres à densité élevée) ou un panneau OSB (panneau de fibres orientées), un panneau de contreplaqué ou un panneau WPC (panneau de composites bois-plastique).

13. Procédé selon l'une quelconque des revendications 11-12, **caractérisé par** les étapes suivantes :
- l'application d'au moins une couche décorative, en particulier sous la forme d'une impression directe ou d'une strate de papier décoratif sur l'au moins un panneau en matériau dérivé du bois;
- l'application d'au moins un revêtement à action antivirale comprenant une composition contenant de la résine selon l'une quelconque des revendications 1 - 6 sur l'au moins une couche décorative ;
- la compression de la structure de couches en réalisant un stratifié.

14. Procédé selon la revendication 13, **caractérisé par** les étapes suivantes :
- l'application d'au moins une première couche de résine sur l'au moins une couche décorative sur le côté supérieur du panneau en matériau dérivé du bois, dans lequel la première couche de résine présente une teneur en matières solides entre 60 et 80 % en poids, de manière préférée de 65 % en poids ;
- le séchage de la structure composée d'une première couche de résine dans au moins un dispositif de séchage ;
- l'application d'au moins une deuxième couche de résine sur le côté supérieur et en option sur le côté inférieur du panneau en matériau dérivé du bois, dans lequel la deuxième couche de résine présente une teneur en matières solides entre 60 et 80 % en poids, de manière préférée de 65 % en poids ;
- en option la dispersion homogène de particules résistantes à l'abrasion sur la deuxième couche de résine sur le côté supérieur du panneau en matériau dérivé du bois ;
- puis le séchage de la deuxième couche de résine avec les particules résistantes à l'abrasion optionnelles dans au moins un dispositif de séchage ;
- l'application d'au moins une troisième et d'une quatrième couche de résine, dans lequel la troisième couche de résine présente une teneur en matières solides entre 50 et 70 % en poids, de manière préférée de 60 % en poids,
- puis le séchage de la troisième couche de résine appliquée dans au moins un autre dispositif de séchage ;
- l'application d'au moins une quatrième couche de résine, dans lequel la quatrième couche de résine présente une teneur en matières solides entre 50 et 70 % en poids, de manière préférée de 60 % en poids ;
- puis le séchage de la quatrième couche de résine appliquée dans au moins un autre dispositif de séchage ;
- l'application d'au moins une suspension de résine avec une teneur en matières solides entre 50 et 70 % en poids, de manière préférée de 55 % en poids, comprenant la composition contenant de la résine selon l'une quelconque des revendications 1 - 6 ;
- puis le séchage de la suspension de résine appliquée dans au moins un autre dispositif de séchage ; et
- la compression de la structure de couches dans une presse à cycle court.

15. Procédé selon l'une quelconque des revendications 13-14, **caractérisé en ce que** l'étape de pressage est effectuée dans une pression à cycle court à des températures entre 150 et 250 °C, de manière préférée à 160 °C, et à une pression entre 30 et 60 kg/cm².
